# EUROPEAN PATENT SPECIFICATION

(11) **EP 1 412 197 B1**
(45) Date of publication and mention of the grant of the patent: **16.11.2005**
(21) Application number: 02752641.7
(22) Date of filing: 31.07.2002
(51) Int. Cl.: B41M 5/00, C09D 175/04

(54) **WATER RESISTANT INK JET PRINTABLE SHEET**
WASSERBESTÄNDIGES TINTENSTRAHLAUFZEICHNUNGSBLATT
FEUILLE HYDRORESISTANTE IMPRIMABLE PAR JET D'ENCRE

(30) Priority: 01.08.2001 US 309348 P; 26.07.2002 US 205033
(43) Date of publication of application: 28.04.2004
(73) Proprietor: PPG Industries Ohio, Inc., Cleveland, OH 44111 (US)
(72) Inventor: BENENATI, Paul, L., Wadsworth, OH 44281 (US); HILL, Charles, T., New Brighton, PA 15066 (US); KAHLE, Charles, F., Pittsburgh, PA 15237 (US); KOVACS, Joseph, P., The Woodlands, TX 77382 (US); LIPKO, Larry, E., North Irwin, PA 15642 (US); PARRINELLO, Luciano, M., Allison Park, PA 15101 (US)
(74) Representative: Sternagel, Fleischer, Godemeyer & Partner
(86) International application number: PCT/US2002/024257
(87) International publication number: WO 2003/011608

(56) References cited:
- EP-A- 0 289 859
- EP-A- 1 048 479
- PATENT ABSTRACTS OF JAPAN vol. 006, no. 098 (C-106), 8 June 1982 (1982-06-08) & JP 57 030771 A (AICA KOGYO CO LTD), 19 February 1982 (1982-02-19)

## Description

### BACKGROUND OF THE INVENTION

The present invention is directed to an ink jet recordable substrate. In particular, the present invention relates to a water-resistant, coated, ink jet recordable substrate. This application is a conversion of United States Provisional Patent Application having Serial No. 60/309,348, filed on August 1, 2001.

It is known in the art to size paper with sizing components for the purpose of retarding or preventing penetration of liquids into the structure. "Internal sizing" consists of introducing sizing materials into the pulp during the paper making operation. The sizing materials are precipitated onto the fibers primarily for the purpose of controlling penetration of liquids into the final dry paper. "Surface sizing" involves the application of dispersions of film-forming substances such as converted starches, gums, and modified polymers, to previously formed paper. Surface sizing imparts strength to the paper.

The use of sized paper to print with an ink jet printer containing predominantly water-based inks may yield imaged papers which have a tendency to curl into tubes. The use of un-sized paper may result migration of the image through the sheet and interference with the image on the other side, if one side of the imaged sheet comes into contact with water.

Various attempts have been made in the art to overcome the forgoing problems. For example, United States Patent 5,709,976 discloses a paper substrate coated with a hydrophobic barrier layer and an image receiving layer. The hydrophobic barrier layer is coated on both sides of the paper and includes a water insoluble, component and a water or alcohol soluble anti-curl agent. United States Patent 6,140,412 teaches a process for coating paper with an aqueous cationic polyurethane resin solution. Japanese Patent (JP) 11216945 discloses a process for coating paper with a composition that includes polyvinylpyrrolidone, a polyurethane resin emulsion, polyvinyl alcohol and a cationic resin.

United States Patents 4,861,644 and 5,196,262 disclose a microporous material sheet which includes a matrix of linear ultrahigh molecular weight polyolefin, a large proportion of finely divided water-insoluble siliceous filler, and interconnecting pores. U.S. Patent No. 6,025,068 teaches a method of coating a microporous polyolefin substrate with a coating composition which includes a binder dissolved or dispersed in a volatile aqueous liquid medium. The binder includes a film-forming organic polymer of a water-soluble poly(ethylene oxide) and a water-soluble or water-dispersible crosslinkable urethane-acrylate hybrid polymer.

Another coating composition for ink jet recording materials is disclosed in Japanese Patent (JP) 2001-184881. This reference discloses a coating composition that includes a nonionic or anionic polyurethane and the reaction product of a monomeric secondary amine and epichlorohydrin. Japanese Patents (JP) 11268406 and (JP) 2000153667 disclose cationic polyurethanes that are useful in waterproofing coatings for ink jet printing substrates.

There remains a need for an ink jet recording medium that is durable, water-resistant and able to record sharp images when an ink jet printing ink is applied thereto.

### SUMMARY OF THE INVENTION

The present invention is directed to a water-resistant coating composition for an ink jet recordable substrate. The coating composition has a pH of less than 7 and includes:
(a) an aqueous anionic polyurethane dispersion; and
(b) an aqueous solution of a cationic nitrogen-containing polymeric dye fixative compound.

The present invention is also directed to a method of coating an ink jet recordable substrate in which the above-defined coating composition is applied to the substrate.

The present invention is further directed to an ink jet recordable substrate wherein at least one side of the substrate has a coating layer of the above-described coating composition.

### DETAILED DESCRIPTION OF THE INVENTION

Unless otherwise indicated, all references to (meth)acrylic, (meth)acrylate and (meth)acrylamide monomers is meant to include both the methacrylic and acrylic species.

Various numerical ranges are disclosed in this patent application. Because these ranges are continuous, they include every value between the minimum and maximum values.

The coating composition of the present invention includes an aqueous anionic polyurethane dispersion and an aqueous solution of a cationic nitrogen-containing polymeric dye fixative compound.

The mixing of an anionic polymer and a cationic polymer typically results in a polysalt which is often insoluble in water and other solvents. In the present invention, it has been surprisingly found that the addition of an aqueous solution of a cationic nitrogen-containing polymer to an aqueous anionic polyurethane dispersion results in a stable dispersion which is useful as a coating composition for an ink jet recordable substrate. However, a reversal in the order of addition such that the anionic polyurethane dispersion is added to the aqueous solution of a cationic nitrogen-containing polymer, results in the formation and precipitation of a polysalt from the aqueous solution.

An aqueous dispersion of an anionic polyurethane resin for use in the invention comprises particles of an anionic polyurethane polymer dispersed in an aqueous medium. The polyurethane polymer has at least one pendent acid group which may be neutralized in the presence of a base to form anionic group(s), which stabilize the dispersion.

The anionic polyurethane for use in the invention may be prepared by a method known in the art. For example, the reaction of (i) a polyisocyanate, (ii) a polyol, (iii) a compound having an acid group, and optionally (iv) a chain-extending compound such as a polyamine or hydrazine, produces a suitable anionic polyurethane. As used herein and the claims, "polyisocyanate" refers to a compound having more than one isocyanate group. Examples of suitable polyisocyanates for use in the present invention include diisocyanates such as toluene diisocyanate, hexamethylene diisocyanate, isophorone diisocyanate and dicyclohexyl methane diisocyanate; three or more functional isocyanates which may be the reaction products of diisocyanates with polyols such as trimethylol propane, glycerol and pentaerythritol. Suitable polyisocyanates for use in the invention are commercially available from Bayer Corporation under the tradename Desmodur.

As used herein and the claims, "polyol" refers to a compound with more than one hydroxyl group. Examples of suitable polyols are simple polyols such as those used to prepare polyisocyanate, polyester polyols and polyether polyols.

The anionic polyurethane for use in the present invention may include an acid group such as a carboxylic acid or sulfonic acid group and two groups, which can react with either a polyisocyanate or a polyol. An example of a group, which may react with a polyol, is an isocyanate group. Examples of groups which may react with a polyisocyanate include hydroxyl groups and amine groups. An example of a compound having two hydroxyl groups and an acid group is dimethylol proprionic acid. An example of a polyamine includes ethylene diamine, isophorone diamine or diethylene triamine.

The anionic polyurethane dispersion for use in the invention is dispersed using a base which ionizes the acidic group(s) on the polymer and stabilizes the dispersion. The base may include any known inorganic base, ammonia or an amine.

The (i) polyisocyanate, (ii) the compound having an acid group, and (iii) the polyol may be reacted in the presence of an organic solvent to form an isocyante-terminated prepolymer. Suitable organic solvents include n-methyl pyrrolidone, tetrahydrofuran or a glycol ether. The isocyanate-terminated prepolymer may be dispersed in water in the presence of a base, and then chain extended by adding the polyamine. In an embodiment, the prepolymer is chain extended in an organic solvent solution and then the polyurethane polymer is dispersed in water in the presence of the base.

Suitable anionic polyurethanes for use in the present invention include anionic polyurethanes based on aromatic polyether polyurethanes, aliphatic polyether polyurethanes, aromatic polyester polyurethanes, aliphatic polyester polyurethanes, aromatic polycaprolactam polyurethanes, and/or aliphatic polycaprolactam polyurethanes. An anionic polyurethane dispersion for use in the present invention is commercially available from Crompton Corporation under the tradename WitcoBond®.

The aqueous anionic polyurethane dispersion of the coating composition contains up to 70 wt.%, or up to 65 wt.%, or up to 60 wt.%, or up to 50 wt.% of the anionic polyurethane. The aqueous anionic polyurethane dispersion includes at least 1 wt.%, or at least 5 wt.%, or at least 10 wt.%, or at least 20 wt.% of the anionic polyurethane. The amount of anionic polyurethane in the aqueous anionic polyurethane dispersion is not critical. In general, the amount should not be so high as to cause the dispersion itself or the mixture with the nitrogen-containing polymer to be unstable, or so low that the coating composition does not provide sufficient water and rub resistance or that the dispersion itself becomes unstable. The anionic polyurethane may be present in the aqueous anionic polyurethane dispersion in any range of values inclusive of those stated above.

A cationic polyurethane dispersion may include a known water-dispersible cationic polyurethane. Suitable cationic polyurethanes are available commercially from Crompton Corporation under the tradename Witcobond, for example, Witcobond W-213 and W-215 formulations.

The cationic polyurethane may be prepared by a method known in the art. United States Patent 3,470,310 discloses the preparation of a water dispersion of a polyurethane which contains salt-type groups bonded into the polyurethane. United States Patent 3,873,484 discloses an aqueous dispersion of a polyurethane prepared from quaternized polyurethane prepolymer prepared by reacting an alkoxylated diol, an N-alkyl dialkanolamine, an organic diisocyanate and quaternizing with a dialkyl sulfate quaternizing agent. United States Patent 6,221,954 teaches a method for making a polyurethane prepolymer in which a N-monoalkanol tertiary amine is reacted with an alkylene oxide in the presence of a strong acid to form a polyol salt, which is further reacted with an excess amount of an organic polyisocyanate and chain extended with an active hydrogen-containing compound.

The aqueous cationic polyurethane dispersion contains up to 70 wt.%, or up to 65 wt.%, or up to 60 wt.%, or up to 50 wt.% of the cationic polyurethane. The aqueous cationic polyurethane dispersion includes at least 1 wt.%, or at least 5 wt.%, or at least 10 wt.%, or at least 20 wt.% of the cationic polyurethane. The amount of cationic polyurethane in the aqueous cationic polyurethane dispersion is not critical. In general, the amount should not be so high as to cause the dispersion itself or the mixture with the nitrogen-containing polymer to be unstable, or so low that the coating composition does not provide sufficient water and rub resistance or that the dispersion itself becomes unstable. The cationic polyurethane may be present in the aqueous cationic polyurethane dispersion in any range of values inclusive of those stated above.

A nonionic polyurethane dispersion may include a known water-dispersible nonionic polyurethane. Suitable cationic polyurethanes are available commercially from Crompton Corporation under the tradename Witcobond, for example, Witcobond W-230 formulation.

The nonionic polyurethane may be prepared by a method known in the art. For example, Szycher (i.e., "Szycher's Book of Polyurethanes" by Michael Szycher, CRC Press, New York, NY, 1999, pages 14-10 through 14-15) describes the preparation of water dispersions of polyurethanes, which contain hydrophilic polyether-type groups either branching off or terminating on the main polyurethane chains. Polyethylene oxide units (having a molecular weight (MW) of from 200 to 4,000) are typically used as dispersing sites. Nonionic polyurethanes may be prepared by the use of diols or diisocyanate comonomers bearing pendant polyethylene oxide chains.

The aqueous nonionic polyurethane dispersion contains up to 70 wt.%, or up to 65 wt.%, or up to 60 wt.%, or up to 50 wt.% of the nonionic polyurethane. The aqueous nonionic polyurethane dispersion includes at least 1 wt.%, or at least 5 wt.%, or at least 10 wt.%, or at least 20 wt.% of the nonionic polyurethane. The amount of nonionic polyurethane in the aqueous nonionic polyurethane dispersion is not critical. In general, the amount should not be so high as to cause the dispersion itself or the mixture with the nitrogen-containing polymer to be unstable, or so low that the coating composition does not provide sufficient water and rub resistance or that the dispersion itself becomes unstable. The nonionic polyurethane may be present in the aqueous nonionic polyurethane dispersion in any range of values inclusive of those stated above.

The aqueous solution of a cationic nitrogen-containing polymer for use as a dye fixative in the coating composition of the present invention, has a pH of less than 7, or less than 6, or less than 5. A pH value within this range allows for at least a portion of the nitrogen atoms to carry at least a portion of a cationic charge. The resulting coating composition will have a pH of less than 7, or less than 6, or less than 5.

As used herein and in the claims, "aqueous solution" means that the cationic nitrogen-containing polymer is soluble in a liquid medium such as water.

A dye fixative is generally used to fix dyes to a substrate to preclude the dyes from bleeding or migrating out of the substrate when the substrate is contacted with water.

A known cationic nitrogen-containing polymer in which at least a portion of the nitrogen atoms carry at least a portion of a cationic charge within the above-mentioned pH range of the coating composition, may be used in the present coating composition as a dye fixative. Suitable cationic nitrogen-containing polymers include cationic polymers having one or more monomer residues derived from one or more of the following nitrogen-containing monomers: 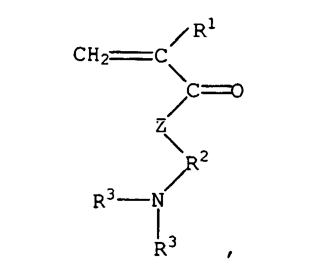 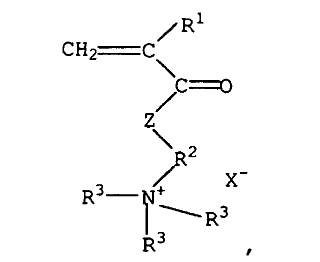 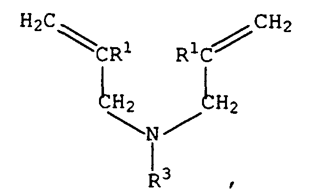 and 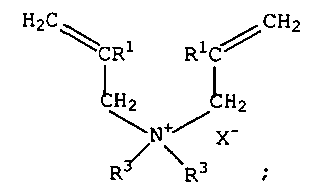 where R¹ represents independently for each occurrence in each structure, H or C₁ to C₃ aliphatic; R² represents independently for each structure a divalent linking group selected from C₂ to C₂₀ aliphatic hydrocarbon, polyethylene glycol and polypropylene glycol; R³ represents independently for each occurrence in each structure H, C₁ to C₂₂ aliphatic hydrocarbon or a residue from the reaction of the nitrogen with epichlorohydrin; Z is selected from -O- or -NR⁴-, where R⁴ is H or CH₃; and X is a halide or methylsulfate.

Examples of nitrogen-containing monomers or resulting monomer residues for use in the present invention include dimethyl aminoethyl (meth)acrylate, (meth)acryloyloxyethyl trimethyl ammonium halides, (meth)acryloyloxyethyl trimethyl ammonium methylsulfate, dimethyl aminopropyl (meth)acrylamide, (meth)acrylamidopropyl trimethyl ammonium halides, aminoalkyl (meth)acrylamides where the amine is reacted with epichlorohydrin, (meth)acrylamidopropyl trimethyl ammonium methylsulfate, diallyl amine, methyl diallyl amine, and diallyl dimethyl ammonium halides.

The cationic nitrogen-containing polymers may contain additional monomer residues. The additional monomer residues may be obtained from any polymerizable ethylenically unsaturated monomer that, when copolymerized with the nitrogen-containing monomers allows the resulting polymer to be at least partially soluble in water. As used herein and the claims, "partially soluble" refers to at least 0.1 gram of the polymer dissolving in water when ten (10) grams of the polymer is added to one (1) liter of water and mixed for 24 hours.

Examples of monomers that may be copolymerized with the nitrogen-containing monomers include (meth)acrylamide, n-alkyl (meth)acrylamides, (meth)acrylic acid, alkyl esters of (meth)acrylate, glycol esters of (meth)acrylic acid, polyethylene glycol esters of (meth)acrylic acid, hdroxyalkyl (meth)acrylates, itaconic acid, alkyl ethers of itaconic acid, maleic acid, mono- and di-alkyl esters of maleic acid, maleic anhydride, maleimide, aconitic acid, alkyl esters of aconitic acid, allyl alcohol and alkyl ethers of allyl alcohol.

In an embodiment, the cationic nitrogen-containing polymer is a homopolymer of a nitrogen-containing monomer, or a copolymer of one or more nitrogen-containing monomers. In another embodiment, the nitrogen-containing polymer is a copolymer of one or more polymerizable ethylenically unsaturated monomers and one or more nitrogen containing monomers. When the nitrogen-containing polymer includes any of the aforementioned additional polymerizable ethylenically unsaturated comonomers, the nitrogen-containing polymer includes not more than 70 mol%, or not more than 50 mol%, or not more than 25 mol%, or not more than 10 mol% of the nitrogen-containing monomer. The amount of nitrogen-containing monomer may be dependent upon the specific polyurethane used in the present coating composition. When the amount of the nitrogen-containing monomer used in the nitrogen-containing polymer is too high, an unstable mixture of the nitrogen-containing polymer and polyurethane dispersion may result. It is typically difficult to properly apply an unstable mixture to an ink recordable substrate.

When the nitrogen-containing polymer includes any of the aforementioned additional polymerizable ethylenically unsaturated comonomers, the nitrogen-containing polymer includes at least 0.1 mol%, or at least 1.0 mol%, or at least 2.5 mol%, or at least 5.0 mol% of the nitrogen-containing monomer. When the amount of nitrogen-containing monomer in the nitrogen-containing polymer is too low, the nitrogen-containing polymer may not provide adequate dye fixative properties and a recorded ink image on the coated substrate may lack water and rub fastness properties.

The nitrogen-containing monomers may be present in the nitrogen-containing polymer in any range of values inclusive of those stated above. The additional polymerizable ethylenically unsaturated monomers will be present in an amount such that the total percentage is 100 mol%.

In the present invention, the aqueous solution of the cationic nitrogen-containing polymeric dye fixative includes at least 5 wt.%, or at least 10 wt.%, or at least 15 wt.% of the nitrogen-containing polymer; and not more than 50 wt.%, or not more than 45 wt.%, or not more than 40 wt.% of the nitrogen-containing polymer. When the concentration of the nitrogen-containing polymer is too low, it is not economical for commercial applications and may be too dilute to provide optimum ratios with the polyurethane. When the concentration is too high, the solution may be too viscous to easily handle in a commercial environment. Examples of cationic nitrogen-containing polymers useful in the present invention are solutions of polyamide amines reacted with epichlorohydrin, available under the trade name CinFix from Stockhausen GmbH & Co. KG, Krefeld, Germany.

The ink jet recordable substrate coating composition of the present invention includes a mixture of an aqueous solution of a cationic nitrogen-containing polymer and an anionic aqueous polyurethane dispersion. The mixture includes from 10 wt.% to 70 wt.%, or from 20 wt.% to 60 wt.%, or from 30 wt.% to 50 wt.% of an aqueous anionic polyurethane dispersion. The mixture will also include from 30 wt.% to 90 wt.%, or from 40 wt.% to 80 wt.%, or from 50 wt.% to 70 wt.% of an aqueous solution of the cationic nitrogen-containing polymer. The weight percentages are based on the total weight of the ink jet recordable substrate coating composition.

In an embodiment of the present invention, water is added to the mixture of the cationic nitrogen-containing polymer and the anionic polyurethane. When water is added to the mixture, the resulting ink jet recordable substrate coating composition has a total resin solids of from 1 wt.% to 35 wt.%, or from 1 wt.% to 20 wt.%, or from 1 wt.% to 10 wt.% based on the total weight of the ink jet recordable substrate coating composition. When the total resin solids is too high, the viscosity of the coating composition may be such that poor penetration of the coating composition results. When the total resin solids is too low, the viscosity of the coating composition may be such that poor coating to the substrate results. In an embodiment, the viscosity of the coating composition of the present invention is less than 500 cps, or less than 400 cps; and at least 10 cps, or at least 25 cps when measured using a Brookfield viscometer (RVT, spindle no. 1, 50 rpm at 25°C). A viscosity within the aforementioned ranges provides for the coating composition to wet the substrate while maintaining a degree of porosity in the final coated substrate.

In an embodiment, the coating composition of the present invention includes a co-solvent. A co-solvent known in the art may be used. Suitable co-solvents include lower alkyl alcohols,
n-methylpyrrolidone, Dowanol PM, toluene, and glycol ethers.

The coating composition of the present invention may also include other additives typically known in the art. Such additives include surfactants, such as nonionic, cationic, anionic, amphoteric and zwiterionic surfactants; rheology modifiers, such as polyvinyl alcohols, polyvinyl pyrrolidones, polyethylene oxides, polyacrylamides, natural and synthetic gums; biocides, such as a blend of 5-chloro-2-methyl-4-isothiazoline-3-one and 2-methyl-4-isothiazolin-3-one available commercially by the trade name Kathon, from Rohm and Haas Co., 2-hydroxypropylmethane thiosulfonate, and dithiocarbamates; and coupling agents, such as titanium, silane-type, trisodium pyrophosphate.

The pH of the coating composition of the present invention is less than 7, or less than 6, or less than 5. When the pH is outside of these ranges, the cationic polymeric dye fixative compound may not carry a sufficient cationic charge to perform its intended function. Further, on certain substrates the wetting action of the coating composition may be improved when the pH is within the aforementioned ranges. In an embodiment, for commercial applications, the coating composition has pH greater than 2.

The present invention is also directed to a method of preparing the ink jet recordable substrate coating composition. The present method includes the step of adding the aqueous solution of a cationic nitrogen-containing polymer into an aqueous anionic polyurethane dispersion. Sufficient mixing is maintained during the addition to ensure that a homogeneous mixture results. It has been observed that when the aqueous anionic polyurethane dispersion is added to the aqueous solution of a cationic nitrogen-containing polymer, coagulation occurs and a homogeneous mixture is not obtained.

The present invention is further directed to a method of coating an ink jet recordable substrate. The method includes the steps of:
(a) providing an ink jet recordable substrate having a top surface and a bottom surface;
(b) providing the coating composition described above; and
(c) applying the coating composition to at least one surface of the ink jet recordable substrate.

Any ink jet recordable substrate may be used in the present invention. The ink jet recordable substrate has a porosity of at least 35%, or from 35% to 80%, by volume of the substrate. The ink jet recordable substrate for use in the present invention may be any cellulosic-based paper. United States 4,861,644 and 5,196,262, both of which are herein incorporated by reference, describe suitable microporous substrates for use in the present invention.

In an embodiment, the ink jet recordable substrate is a microporous substrate. An example of a suitable microporous substrate includes an ink jet recordable substrate having a top surface and a bottom and which includes:
(a) a matrix comprising a polyolefin;
(b) a particulate siliceous filler distributed throughout the matrix; and
(c) a network of interconnecting pores communicating throughout the microporous substrate, wherein the pores constitute at least 35 percent by volume of the microporous substrate.

Any polyolefin known in the art such as polyethylene or polypropylene may be used in the microporous substrate. In an embodiment, the polyethylene is a linear high molecular weight polyethylene having an intrinsic viscosity of at least 10 deciliters/gram and the polypropylene is a linear high molecular weight polypropylene having an intrinsic viscosity of at least 5 deciliters/gram.

As recorded herein and in the claims, intrinsic viscosity is determined by extrapolating to zero concentration the reduced viscosities or the inherent viscosities of several dilute solutions of the polyolefin wherein the solvent is distilled decahydronaphthalene to which 0.2 percent by weight, 3,5-di-tert-butyl-4-hydroxyhydrocinnamic acid, neopentanetetrayl ester [CAS Registry No. 6683-19-8] has been added. The reduced viscosities or the inherent viscosities of the polyolefin are ascertained from relative viscosities obtained at 135°C using an Ubbelohde No. 1 viscometer.

On a coating-free, printing ink free, impregnant-free, and pre-bonding basis, pores constitute at least 35 percent by volume of the microporous substrate. In some instances, the pores constitute at least about 60 percent by volume of the microporous substrate, or from 35 percent to about 80 percent, or from 60 percent to 75 percent by volume of the microporous substrate.

The siliceous particles may be in the form of ultimate particles, aggregates of ultimate particles, or a combination of both. As used herein and in the claims, the term "ultimate particles" refers to small discrete particles of colloidal polymerized silicic acid units which make up amorphous silica. The term "aggregate" as used herein and in the claims, refers to a structure wherein ultimate particles are condensed to produce an open but continuous structure of chains or a solid structure of interconnecting pores.

In an embodiment, the siliceous particles are finely-divided. As used herein and in the claims, "finely-divided" refers to a maximum retention of 0.01% by weight on a 40 mesh sieve screen.

In a further embodiment, the siliceous particles are substantially insoluble. As used herein and in the claims, the term "substantially insoluble" refers to amorphous silica exhibiting a reproducible equilibrium solubility in water which may range from 70 ppm to greater than 150 ppm in water at a temperature of 25°C. It is believed that variations in solubility are due to differences in particle size, state of internal hydration and the presence of trace impurities in the silica or absorbed on its surface. The solubility of the silica may also be dependent on the pH of the water. As pH increases from neutrality (i.e., pH of 7) to alkalinity (i.e., pH greater than 9), the solubility of silica may increase. (See "The Chemistry of Silica", R.K. Iler, Wiley-Interscience, NY (1979), pp. 40-58.)

In the present invention, at least 90 percent by weight of the siliceous particles used in preparing the microporous substrate have particle sizes in the range of from 5 to 40 micrometers. The particle size is determined by use of a Model TaII Coulter Multisizer Particle Size Analyzer (Coulter Electronics, Inc.) wherein, prior to analysis by the Coulter Analyzer, the filler is stirred for 10 minutes in Isoton II electrolyte solution (Curtin Matheson Scientific, Inc.) using a four-blade, 4.445 centimeter diameter propeller stirrer. In an embodiment, at least 90 percent by weight of the siliceous particles have particle sizes in the range of from 10 to 30 micrometers. It is expected that the sizes of filler agglomerates may be reduced during processing of the ingredients to prepare the microporous substrate.

Suitable siliceous particles include, but are not limited to particles of silica, mica, montmorillonite, kaolinite, asbestos, talc, diatomaceous earth, vermiculite, natural and synthetic zeolites, cement, calcium silicate, aluminum silicate, sodium aluminum silicate, aluminum polysilicate, alumina silica gels, and glass particles. Silica and the clays are commonly used siliceous particles. In an embodiment, precipitated silica, silica gel, or fumed silica is used.

In an embodiment, the siliceous particles are coated prior to incorporation in the microporous substrate. A method known in the art may be used to coat the particles. The selection of the method of coating the siliceous particles is not critical. For example, the coating ingredients may be added to an aqueous slurry of pre-washed silica filter cake under sufficient stirring to allow for complete mixing of the ingredients, followed by drying, using conventional techniques known in the art.

The coating may include the aforementioned aqueous polyurethane dispersions, and/or the aforementioned cationic nitrogen-containing polymeric compounds.

United States Patent Applications having serial numbers 09/636,711; 09/636,312; 09/636,310; 09/636,308; 09/636,311 and 10/041,114; disclose suitable coating compositions and methods of coating silica particles which may be used in the present invention.

The particulate siliceous filler constitutes from 50 to 90 percent by weight of the microporous substrate. In an embodiment, the filler constitutes from 50 to 85 percent, or from 60 to 80 percent by weight of the microporous substrate.

In addition to the siliceous particles, substantially water-insoluble non-siliceous filler particles may also be used in the microporous substrate. Examples of such optional non-siliceous filler particles include particles of titanium oxide, iron oxide, copper oxide, zinc oxide, antimony oxide, zirconia, magnesia, alumina, molybdenum disulfide, zinc sulfide, barium sulfate, strontium sulfate, calcium carbonate, magnesium carbonate, magnesium hydroxide, and finely divided substantially water-insoluble flame retardant filler particles such as particles of ethylenebis(tetra-bromophthalimide), octabromodiphenyl oxide, decabromodiphenyl oxide, and ethylenebisdibromonorbornane dicarboximide.

In an embodiment of the invention, the substrate is highly porous. The term "highly porous" refers to a substrate having a porosity of not more than 20,000, or not more than 10,000 and in many cases not more than 7,500 seconds/100cc air. The porosity is typically at least 50 seconds/100cc air. These porosity values are determined in accordance with the method described in ASTM D726, with the following exceptions relative to Section 8 of the ASTM. In the present invention, the sheet samples are tested without conditioning in accordance with ASTM D685, and only three (3) specimens for a given sample type are tested for a total of six (6) measurements (three measurements per two surfaces) for a given specimen type rather than a minimum of ten specimens for a given samples as stated in ASTM D726. The lower the value in seconds/cc air, the more porous is the substrate. Highly porous substrates may be produced by various methods known in the art, such as thermally treating a substrate, orienting, compositionally by increasing the filler content, microvoiding films, or etching. Examples of highly porous substrates include thermally treated microporous materials such as Teslin TS-1000 which is commercially available from PPG Industries, Inc., Pittsburgh, PA.

The coated microporous substrate has a thickness of at least 2,54 µm (0.1 mils), or from 12,7 to 2540 µm (0.5 to 100 mils), or from 24,5 to 1270 µm (1 to 50 mils), and in some cases from 101,6 to 355,6 µm (4 to 14 mils). When the coated microporous substrate has a thickness which exceeds the aforementioned ranges, it may not feed properly through an ink jet printer. When the coated microporous substrate is below the stated ranges, it may not have sufficient strength for its intended use.

Any method known in the art may be used to apply the coating composition of the present invention to the ink jet recordable substrate such as flexography, spraying, air knife coating, curtain coating, dipping, rod coating, blade coating, gravure, reverse roll, roller application, imbibing, size press, printing, brushing, drawing, slot-die coating, and extrusion.

Following application of the coating composition to said substrate, the solvent is removed from the applied coating by any conventional drying technique. In an embodiment, the coating is dried by exposing the coated substrate to a temperature ranging from ambient to 177°C (350°F).

The coating composition is applied at least one time to at least one surface of the substrate. When the coating composition is applied more than one time, the applied coating is usually but not necessarily dried, either partially or totally, between coating applications.

When the coating composition is applied to a microporous substrate, the coating composition will often penetrate into the substrate. Penetration of the coating layer into the microporous substrate improves the ink jet print quality on the coated substrate. Typically, the coating layer penetrates into at least the first one (1) micrometer of the surface of the microporous substrate. In some instances, the coating layer penetrates into at least the first ten (10) micrometers or at least the first twenty (20) micrometers or at least the first thirty (30) micrometers of the microporous substrate.

In an embodiment of the present invention, the coating composition is applied to the substrate using an air knife coating technique where the excess coating is 'blown off' by a powerful jet from the air knife. In another embodiment, a reverse roll coating method is used. In this procedure, the coating composition is measured onto an applicator roller by precision setting of the gap between an upper metering roller and the application roller below it. The coating is wiped-off the application roller by the substrate as it passes around the support roller at the bottom.

In another embodiment of the present invention, gravure coating is used to apply the coating composition. In the gravure coating method, an engraved roller runs in a coating bath, which fills the engraved dots or lines of the roller with the coating composition. Any excess coating on the roller is wiped off by a doctor blade and the coating is deposited onto the substrate as it passes between the engraved roller and a pressure roller. Reverse gravure coating methods may be used. In this method, the coating composition is metered by the engraving on a roller before being wiped off as in a conventional reverse roll coating process.

In a further embodiment a metering rod may be used to apply the coating composition. When a metering rod is used, an excess of the coating is deposited onto the substrate as it passes over a bath roller. The wire-wound metering rod, sometimes known as a Meyer Bar, allows the desired quantity of the coating to remain on the substrate. The quantity is determined by the diameter of the wire used on the rod.

The amount of the substantially dry coating applied to the substrate, or "coat weight", is measured as coating weight per coated area. The coat weight may vary widely, but in most instances will be at least 0.001 g/m², or at least 0.01 g/m², and in some cases at least 0.1 g/m². The coat weight is not more than 50 g/m², or not more than 40 g/m², and in some cases not more than 35 g/m². The coat weight may vary between any of the stated amounts.

The present invention is also directed to a coated microporous substrate. The coated microporous substrate includes the microporous substrate having at least one coated surface as described above. The surface is coated with the aforementioned coating composition which includes a cationic polymeric nitrogen containing dye fixative compound and one or more polyurethanes as described above. The substantially dried coating layer includes the polyurethane at from 10 to 70 percent, or from 20 to 60 percent, and in some cases from 30 to 55 percent by weight of the coating layer and the nitrogen-containing polymer at from 30 to 90 percent, or from 40 to 80 percent, and in some cases from 45 to 70 percent by weight of the coating layer. The amount of each component in the substantially dried coating layer is determined by the amount of each used to prepare the coating composition.

As used herein and in the claims, "substantially dry" is used to refer to the coating layer that feels dry to touch.

The present invention is more particularly described in the following examples, which are intended to be illustrative only, since numerous modifications and variations therein will be apparent to those skilled in the art. Unless otherwise specified, all parts and percentages are by weight and all references to water are meant to be deionized water.

### EXAMPLES

### Example 1

A coating composition of the present invention was prepared by diluting in a stainless steel mix tank under high speed mixing with an overhead mixer, a 61.5% solids by weight anionic polyurethane dispersion sold under the trade name WitcoBond® 234 available from Crompton Corporation, Greenwich, Connecticut, to 9.22% solids by weight. In a separate feed tank a 55% solids by weight solution of a polyamide amine reacted with epichlorohydrin sold under the trade name CinFix NF by Stockhausen GmbH & Co. KG, Krefeld, Germany, was diluted to 5.78% solids by weight, and subsequently added to the diluted anionic polyurethane dispersion, and the mixture was mixed for 15 minutes. The pH was adjusted with glacial acetic acid to 5.0 ± 0.5. The total resin solids of the mixture was 7.5% and the viscosity of the mixture was 46 cps as measured using a Brookfield viscometer, RVT, spindle no. 1, at 50 rpm and 25°C.

### Examples 2-4

Coating compositions were prepared as described in Example 1 and applied to microporous substrates sold under the tradename Teslin by PPG Industries, Pittsburgh, PA. A sheet of 215,9 mm x 279,4 mm (8.5" x 11"), 254 µm (10 mil) thick, Teslin® was placed on a 381 mm x 508 mm (15" x 20") x 508 µm (20 mil) backing sheet. A metering bar was placed 25,4 - 50,8 mm (1-2 inches) sheet. A metering bar was 2 above the Teslin sheet, parallel to the top edge. A 10 - 20 ml quantity of coating was drawn into a disposable plastic syringe. The coating was deposited as a bead strip (approximately 3,175 mm (1/8 inches) wide) directly next to and touching the metering bar. The bar was drawn completely across the sheet of Teslin, attempting a continuous/constant rate. The resultant wet sheet was placed in a forced air oven, secured and dried at 95°C for 2 minutes. The dried sheet was removed from the oven and the same coating procedure was repeated on the opposite side of the sheet. The sheet was then printed and tested. Table 1 shows characteristics of the printed sheets. The coating compositions were applied with an approximate coat weight of 0.73 g/m² (total front and back). As used herein and the claims, "coat weight" refers to the consumption rate of coating (as dry solids) per unit area. For example, the coat weight of "X" grams of coating (as dry solids) consumed in coating "Y" square meters of Teslin, is "X divided by Y" grams per square meter.

**TABLE 1**

| | **Substrate** | **Polyurethane** | **Meyer Bar** |
|---|---|---|---|
| Example 2 | Teslin SP1000 | WitcoBond UCK 051 | #6 Rod |
| Example 3 | Teslin TS1000 | WitcoBond UCK 051 | #9 Rod |
| Example 4 | Teslin TS1000 | WitcoBond 234 | #9 Rod |

Examples 2-4 were printed with an ink jet printer, Model HP960 by Hewlett Packard Company, Palo Alto, California and soaked overnight in water at ambient temperature. Based on visual inspection, it appeared that the recorded images remained intact, i.e., the ink did not bleed and the optical density of the image was not significantly decreased.

### Examples 5-8 ,

A coating composition was prepared as described in Example 1 and applied to Teslin microporous substrates. Two substrates (Examples 5 and 7) were coated using a metering bar as described in Example 2. For coating compositions having a total resin solids of 7.5%, the viscosity was 46 cps; and for 10.0% solids, the viscosity was 63 cps. The viscosity values were measured using a Brookfield viscometer, RVT, spindle no. 1, at 50 rpm and 25°C.

Two substrates (Examples 6 and 8) were coated using a flexographic or gravure coating method to apply the coating. In this coating method, a line consisting of two coating stations, each with a forced air drying oven was used. Each coating station consists of a coating feed chamber, anilox roll and rubber application roll. The coating feed chamber was supplied from a coating holding tank and pump. Both sides of the Teslin sheet were coated. The apparatus was fitted with a 7 BCM (billion cubic micrometres) anilox roll, line speed was 180 fpm, oven temperature was 105°C (220°F) and 8 passes per roll were made, which translates into four passes per surface. The coating compositions were applied with an approximate coat weight of 0.73 g/m² (total front and back).

Table 2 shows the characteristics of the sheets produced.

**TABLE 2**

| | **Substrate** | **Polyurethane** | **Coating** **Method** | **Total** **Resin** **Solids %** |
|---|---|---|---|---|
| Example 5 | Teslin TS1000 | WitcoBond 234 | Meyer #9 Rod | 7.5 |
| Example 6 | Teslin TS1000 | WitcoBond 234 | 7 BCM Anilox (5 BPS*) | 7.5 |
| Example 7 | Teslin TS1000 | WitcoBond 234 | Meyer #9 Rod | 10.0 |
| Example 8 | Teslin TS1000 | WitcoBond 234 | 7 BCM Anilox (4 BPS*) | 10.0 |

| | | | | |
|---|---|---|---|---|
| *BPS = Bumps Per Surface | | | | |

The resultant coated sheets were printed with a test print pattern on a Model HP970 (Hewlett Packard Company) ink jet printer. Color bars from the test print pattern were measured for optical density by submerging in deionized water at ambient temperature for a period of 15 minutes, removing from the water and allowing to air dry for one hour and measuring each color for optical density. The optical density of cyan(C), magenta (M), yellow, black (K) and composite black (CMY) were measured using a Model RD922, MacBeth ANSWER II densitometer, manufactured by Kolimorgen Instrument Corporation, before and after water soak. The results are shown in Table 3.

**TABLE 3**

| | Initial Optical Density¹ | | | | | Optical Density @ 15 Minute Water Soak | | | | |
|---|---|---|---|---|---|---|---|---|---|---|
| | CMY | C | M | Y | K | CMY | C | M | Y | K |
| Example 5 | 1.34 | 1.04 | 1.08 | 0.76 | 1.37 | 1.33 | 1.07 | 1.04 | 0.81 | 1.42 |
| Example 6 | 1.33 | 0.99 | 1.03 | 0.73 | 1.33 | 1.34 | 1.07 | 1.06 | 0.78 | 1.37 |
| Example 7 | 1.36 | 1.04 | 1.09 | 0.77 | 1.38 | 1.33 | 1.05 | 1.02 | 0.79 | 1.37 |
| Example 8 | 1.21 | 1.11 | 1.19 | 0.87 | 1.20 | 1.23 | 1.18 | 1.19 | 0.92 | 1.22 |

### Example 9 (comparative)

A 9.22% solids by weight solution of WitcoBond 234 was applied to a Teslin TS1000 substrate using a metering bar as described in Examples 2-4. Immediately thereafter, a 5.78% solids by weight solution of CinFix NF was similarly applied to the substrate. The coated Teslin TS1000 was then dried at 95°C for 2 minutes. The dried sheet was removed from the oven and the same coating procedure was repeated on the opposite side of the sheet. A test print pattern was printed on the coated Teslin using an HP970 Inkjet Printer as described in Examples 5-8. Based on visual inspection, the printed image demonstrated excessive ink bleeding and poor drying properties.

### Example 10 (comparative)

A 5.78% solids by weight solution of CinFix NF was applied to a Teslin TS1000 substrate as described in Examples 2-4. Immediately thereafter, a 9.22% solids by weight solution of WitcoBond 234 was similarly applied to the substrate. The coated Teslin TS1000 was then dried at 95°C for 2 minutes. The dried sheet was removed from the oven and the same coating procedure was repeated on the opposite side of the sheet. A test print pattern was printed on the coated Teslin using an HP970 Inkjet Printer as described in Examples 5-8. Based on visual inspection, the printed image demonstrated excessive ink bleeding and poor drying properties.

### Example 11 (Comparative)

A 5.78% solids by weight solution of CinFix NF was applied to a Teslin TS1000 substrate as described in Examples 2-4. The coated Teslin TS1000 was then dried at 95°C for 2 minutes. The dried sheet was removed from the oven and the same coating procedure was repeated on the opposite side of the sheet. A test print pattern was printed on the coated Teslin using an HP970 Inkjet Printer as described in Examples 5-8. Based on visual inspection, the printed image was acceptable, however, the printed substrate demonstrated poor water resistance.

### Example 12 (comparative)

A 9.22% solids by weight solution of WitcoBond 234 was applied to a Teslin TS1000 substrate as described in Examples 2-4. The coated Teslin TS1000 was then dried at 95°C for 2 minutes. The dried sheet was removed from the oven and the same coating procedure was repeated on the opposite side of the sheet. A test print pattern was printed on the coated Teslin using an HP970 Inkjet Printer as described in Examples 5-8. Based on visual inspection, the printed image demonstrated unacceptable print quality.

### Example 13 (comparative)

A coating composition was prepared by diluting in a stainless steel mix tank under high speed mixing with an overhead mixer, a 61.5% solids by weight anionic polyurethane dispersion sold under the trade name WitcoBond® 234 available from Crompton Corporation, Greenwich, Connecticut, to 9.22% solids by weight. In a separate feed tank a 55% solids by weight solution of a polyamide amine reacted with epichlorohydrin sold under the trade name CinFix NF by Stockhausen GmbH & Co. KG, Krefeld, Germany, was diluted to 5.78% solids by weight. The WitcoBond 234 dispersion was added to the diluted CinFix NF solution. The resulting suspension demonstrated an unacceptably heavy precipitate which was a polysalt of the CinFix NF and WitcoBond 234.

### Examples 14-16

Coating compositions were prepared as in Example 1 and were applied to silk fabric 45,36 g/0,836 m² ((0.101b/sq yd), 127 µm (5 mil) gauge), cotton fabric 154,2 g/0,836 m² (0.34lb/sq yd), 345,4 µm (13.6mil) gauge) and a polypropylene/cellulose nonwoven substrate 63,5 g/0,836 m² (0.141b/sq yd), 241,3 µm (9.5mil) gauge). For each material coated, a sheet (215,9 x 279,4 mm) (8.5" x 11") was fixed to a 381 mm x 508 mm x 508 µm (15" x 20" x 20 mil) backing sheet. A metering bar was placed 25,4 - 50,8 mm (1 - 2 inches) above the top of the sheet, parallel to the top edge. A 10 - 20 ml quantity of coating was drawn into a disposable plastic syringe. The coating was deposited as a bead strip (approximately 1/8 inches wide) directly next to and touching the metering bar. The bar was drawn completely across the sheet at a continuous/constant rate. The resultant wet sheet was placed in a forced air oven, secured and dried at 95°C for 2 minutes. The dried sheet was removed from the oven and the same coating procedure was repeated on the opposite side of the sheet. The sheet was then taped to a transparency sheet to provide rigidity and was then ready to be printed and tested. The coating compositions were applied with an approximate coat weight of 0.73 g/m² (total front and back). Coat weight was determined as previously described in Examples 2-4.

Examples 14 - 16 were printed with an ink jet printer, Model HP970 by Hewlett Packard Company, Palo Alto, California and compared to the same substrates without coating. After printing, each sheet was removed from the rigid transparency sheet. Coated and uncoated printed sheet types were soaked in water at ambient temperature for 5 days. Optical density was measured after 5 days of soaking. The optical density of cyan (C), magenta (M), yellow (Y), black (K) and composite black (CMY), were measured using a Model RD922, MacBeth ANSWER II Densitometer, manufactured by Kolimorgen Instrument Corporation, before and after water soak.

The recorded images for the coated substrates remained intact after 15 minutes, i.e., the ink did not bleed or the optical density of the image was not significantly decreased for each sample. The uncoated sheets bled immediately, completely washing away the printed image within the 15 minute soak time. The printed image on each of the coated substrate did experience ink bleed after 5 day water soak exposure, as seen by the optical density values. The resultant printed images were faded but had good line sharpness and legible text.

| | Initial Optical Density | | | | | Optical Density @ 5day Water Soak | | | | |
|---|---|---|---|---|---|---|---|---|---|---|
| | CMY | C | M | Y | K | CMY | C | M | Y | K |
| Example 14 | 1.23 | 1.04 | 1.24 | 1.08 | 1.24 | 0.87 | 0.71 | 0.62 | 0.55 | 0.80 |
| Silk (uncoated) | 0.97 | 0.84 | 0.88 | 0.72 | 0.95 | Color bars washed out/not measurable | | | | |
| Example 15 | 1.26 | 1.13 | 1.31 | 1.11 | 1.27 | 0.81 | 0.69 | 0.76 | 0.54 | 0.92 |
| Cotton (uncoated) | 0.94 | 0.81 | 0.91 | 0.81 | 0.95 | Color bars washed out/not measurable | | | | |
| Example 16 | 1.42 | 1.19 | 1.46 | 1.11 | 1.46 | 1.14 | 0.89 | 0.67 | 0.58 | 1.21 |
| Polypropylene/ Cellulose (uncoated) | 1.26 | 1.15 | 1.43 | 1.06 | 1.29 | Color bars washed out/not measurable | | | | |

### Example 17

A coating composition designated herein as "01" was prepared as follows. In a mixing vessel under high speed mixing with an overhead mixer, a 61.5% solids by weight anionic polyurethane dispersion sold under the trade name Witcobond W-234 available from Crompton Corporation, Greenwich, Connecticut, was diluted with deionized water to a 10.0% solids by weight dispersion. In a separate vessel, a 55% solids by weight solution of a polyamide amine reacted with epichlorohydrin sold under the trade name CinFix NF available from Stockhausen GmbH & Co. KG, Krefeld, Germany, was diluted with deionized water to a 10.0% solids by weight solution, and was subsequently added to the diluted anionic polyurethane dispersion. The mixture was mixed for fifteen minutes following completion of the addition. The resulting mixture contained 40 parts by weight of solids of CinFix NF and 60 parts by weight of solids of Witcobond W-234.

A second coating was prepared as above-described with the exception that CinFix NF was replaced on an equivalent dry solids basis with CinFix RDF. This second coating composition is referred to herein as 01/RDF. CinFix RDF is a water solution of poly(diallyl dimethyl ammonium chloride) at 31% solids commercially available from Stockhausen GmbH & Co. KG, Krefeld, Germany. The CinFix RDF was diluted to 10.0% solids by weight prior to addition to the Witcobond W-234.

A third coating was prepared as above-described for the "01" composition with the exception that CinFix NF was replaced on an equivalent dry solids basis with diallyldimethylammonium chloride. This third coating composition is referred to herein as "01/DADMAC". Diallyldimethyl ammonium chloride is commercially available from Aldrich Chemical Company of Milwaukee, WI, as a 65% solution in water. It was diluted to 10.0% solids by weight prior to addition to the Witcobond W-234.

A fourth coating was prepared as above-described for the "01" composition with the exception that CinFix NF was replaced on an equivalent dry solids basis with the reaction product of equimolar amounts of diethyl amine and epichlorohydrin at 30% solids in water. This fourth coating composition is referred to herein as "01/DEA-EPI". The reaction product was not completely miscible with water in the 30/70 parts by weight mix necessary for 30% solids and therefore, was acidified to a pH of 5 with acetic acid to render it soluble in water for use in the coating. It was diluted to 10.0% solids prior to addition to the Witcobond W-234.

Sheets of Teslin® TS1000 and SP1000 were coated on both sides with each of the above-mentioned coatings using a #9 rod. The coating was applied to the front surface, dried for a period of two minutes at a temperature of 95°C, and then applied to the back surface and dried for two minutes at 95°C. The finished sheets were then printed with a pattern on a Hewlett-Packard 960C printer at "HP Premium Photo Paper - Glossy" setting. The color density of the printed color bar section of the pattern was measured using an X-Rite Model 418 Densitometer, calibrated on a white tile standard. The printed color bar section was cut out of each sheet and immersed in a beaker of de-ionized water overnight (i.e., 14 hours). The sections were then removed from the water baths and allowed to air dry for a period of four hours. The color density after soak was then measured.

The results are shown in the following table:

| Coating | Substrate | Soak | CMY | C-100 | M-100 | Y-100 | K-100 |
|---|---|---|---|---|---|---|---|
| "01" | TS1000 | No | 1.31 | 1.23 | 1.24 | 0.93 | 1.31 |
| "01" | | Yes | 1.33 | 1.16 | 1.20 | 0.92 | 1.33 |
| "01" | SP1000 | No | 1.32 | 1.23 | 1.25 | 0.93 | 1.32 |
| "01" | | Yes | 1.32 | 1.16 | 1.19 | 0.90 | 1.33 |
| "01/RDF" | TS1000 | No | 1.52 | 1.10 | 1.20 | 0.88 | 1.55 |
| "01/RDF" | | Yes | 1.54 | 1.04 | 1.10 | 0.84 | 1.55 |
| "01/RDF" | SP1000 | No | 1.16 | 0.97 | 1.28 | 0.99 | 1.20 |
| "01/RDF" | | Yes | 1.13 | 0.91 | 1.21 | 1.00 | 1.15 |
| "01/DADMAC" | TS1000 | No | 1.73 | 1.13 | 1.01 | 0.82 | 1.80 |
| "01/DADMAC" | | Yes | 1.53 | 0.11 | 0.17 | 0.13 | 1.55 |
| "01/DADMAC" | SP1000 | No | 1.37 | 0.91 | 1.44 | 1.06 | 1.58 |
| "01/DADMAC" | | Yes | 0.26 | 0.14 | 0.20 | 0.15 | 0.16 |
| "01/DEA-EPI" | TS1000 | No | 0.81 | 0.98 | 0.85 | 0.57 | 0.81 |
| "01/DEA-EPI" | | Yes | 0.60 | 0.66 | 0.36 | 0.24 | 0.59 |
| "01/DEA-EPI" | SP1000 | No | 0.75 | 0.92 | 0.82 | 0.55 | 0.76 |
| "01/DEA-EPI" | | Yes | 0.54 | 0.62 | 0.35 | 0.23 | 0.55 |

The "01" coating on either substrate exhibited acceptable color density and water resistance and there was no visual evidence of color bleed. Based on visual inspection, the printed images were crisp and clear. The "01/RDF" coating also demonstrated acceptable color density and water resistance, showing no visual bleed. However, based on visual inspection there was a slight "feathering" or blurring of the image on the SP1000 substrate. The "01/DADMAC" coating had high color density before the soak, but based on visual inspection, the inks did not completely dry on the surface and were almost completely removed from both of the substrates during the soak. Further, based on visual inspection, the images were not distinct, there was significant color bleed and the images were not clear. The "01/DEA-EPI" coating had low color density on both substrates and the water resistance was poor. Based on visual inspection, there was no color bleed and the images were clear but appeared faded.

The present invention has been described with reference to the preferred embodiments. Obvious modifications and alterations will occur to others upon reading and understanding the detailed description.

## Claims

1. An ink recordable substrate coating composition having a pH less than 7 comprising:
(a) an aqueous anionic polyurethane dispersion; and
(b) an aqueous solution of a cationic nitrogen containing polymeric dye fixative compound,
obtainable by adding the nitrogen containing polymeric dye fixative compound (b) into the anionic aqueous polyurethane dispersion (a).

2. The ink recordable substrate coating composition of claim 1 wherein the aqueous anionic polyurethane dispersion comprises one or more anionic polyurethanes selected from the group consisting of aromatic polyether polyurethanes, aliphatic polyether polyurethanes, aromatic polyester polyurethanes, aliphatic polyester polyurethanes, aromatic polycaprolactam polyurethanes, and aliphatic polycaprolactam polyurethanes.

3. The ink recordable substrate coating composition of any of claims 1 to 2 wherein the aqueous anionic polyurethane has one or more acid groups selected from the group consisting of carboxylic acid, sulfonic acid and mixtures thereof.

4. The ink recordable substrate coating composition of any of claims 1 to 3 wherein the aqueous solution of a nitrogen containing polymeric dye fixative compound comprises a polymer comprising monomer residues derived from one or more nitrogen containing monomers selected from the group consisting of: 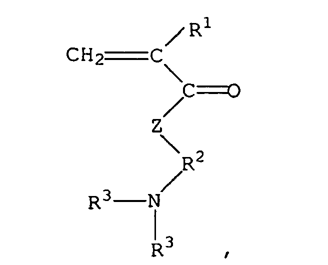 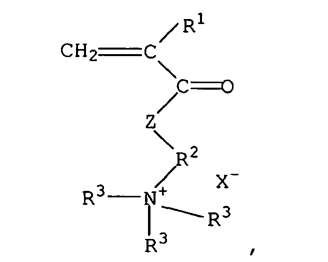 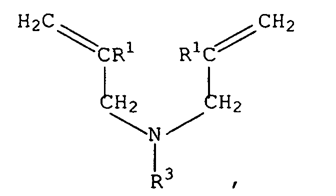 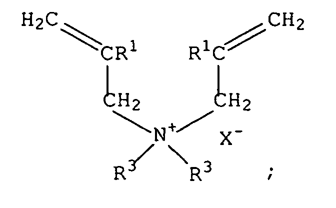 wherein R¹ is selected independently for each occurrence in each structure from the group consisting of H and C₁ to C₃ aliphatic; R² is independently for each structure a divalent linking group selected from the group consisting of C₂ to C₂₀ aliphatic hydrocarbon, polyethylene glycol and polypropylene glycol; R³ is independently for each occurrence in each structure selected from the group consisting of H, C₁ to C₂₂ aliphatic hydrocarbon and a residue from the reaction of the nitrogen with epichlorohydrin; Z is selected from the group consisting of -0- and -NR⁴-, where R⁴ is selected from the group consisting of H and CH₃; and X is selected from the group consisting of halides and methylsulfate.

5. The ink recordable substrate coating composition of any of claims 1 to 4 wherein the aqueous anionic polyurethane dispersion is present at from 10 to 70 percent by weight of the ink recordable substrate coating composition and the aqueous solution of a nitrogen containing polymeric dye fixative compound is present at from 30 to 90 percent by weight of the ink recordable substrate coating composition.

6. The ink recordable substrate coating composition of claim 4 or 5 wherein the nitrogen containing monomer is one or more selected from the group consisting of dimethyl aminoethyl (meth)acrylate, (meth)acryloyloxyethyl trimethyl ammonium halides, (meth)acryloyloxyethyl trimethyl ammonium methylsulfate, dimethyl aminopropyl (meth)acrylamide, (meth)acrylamidopropyl trimethyl ammonium halides, (meth)acrylamidopropyl trimethyl ammonium methylsulfate, aminoalkyl (meth)acrylamid es where the amine is reacted with epichlorohydrin, diallyl amine, methyl diallyl amine, and diallyl dimethyl ammonium halides.

7. The ink recordable substrate coating composition of any of claims 1 to 6 wherein the anionic polyurethane is one or more selected from the group consisting of aromatic polyether polyurethanes, aliphatic polyether polyurethanes, aromatic polyester polyurethanes, and aliphatic polyester polyurethanes.

8. The ink recordable substrate coating composition of any of claims 1 to 7 wherein the nitrogen containing polymeric dye fixative compound is a polyamide amine reacted with epichlorohydrin.

9. The ink recordable substrate coating composition of any of claims 1 to 8 wherein the total resin solids is from 1 to 35 wt.% based on the total weight of the ink recordable substrate coating composition.

10. The ink recordable substrate coating composition of any of claims 1 to 9 wherein the viscosity of the ink recordable substrate coating composition is less than 500 cps.

11. A method for preparing an ink recordable substrate coating composition according to any of claims 1 to 10 by adding an aqueous solution of a cationic polymeric nitrogen containing dye fixative compound (b) to an aqueous anionic polyurethane dispersion (a).

12. A method of coating an ink recordable substrate comprising:
(a) providing an ink recordable substrate having a top surface and a bottom surface;
(b) providing a coating composition according to any of claims 1 to 10.
(c) applying said coating composition to at least one side of the ink recordable substrate.

13. The method of claim 12 wherein the ink recordable substrate comprises a microporous substrate having a top surface and a bottom surface and comprising:
(a) a matrix comprising a polyolefin:
(b) a finely divided particulate siliceous filler distributed throughout the matrix: and
(c) a network of interconnecting pores communicating throughout the microporous substrate, said pores constituting at least about 35 percent by volume of said microporous substrate.

14. The method of claim 12 or 13 wherein the polyolefin comprises one or both selected from the group consisting of a linear high molecular weight polyethylene having an intrinsic viscosity of at least 10 deciliters/gram and a linear high molecular weight polypropylene having an intrinsic viscosity of at least 5 deciliters/gram.

15. The method of any of claims 12 to 14 wherein the siliceous filler constitutes from 50 percent to 90 percent by weight of the microporous substrate.

16. The method of any of claims 12 to 15 wherein the ink rec ordable substrate has a porosity of not more than 20,000 seconds/100cc air.

17. The method of any of claims 12 to 16 wherein the coating composition is applied to both sides of the ink recordable substrate.

18. The method of any of claims 13 to 17 wherein the application of the coating composition comprises:
(a) applying the coating composition to the ink recordable substrate using a method selected from the group consisting of flexography, spraying, air knife coating, curtain coating, dipping, rod coating, bl ade coating, gravure, reverse roll, roller application, Imbibing, size press, printing, brushing, drawing, slot-die coating, and extrusion; and
(b) drying the coated ink recordable substrate by applying a temperature from ambient to 177°C (350°F).

19. A coated microporous substrate obtainable by the method of any of claims 13 to 18.

20. A coated microporous substrate comprising:
(a) a microporous substrate as defined in any of claims 13 to 16 and
(b) a coating layer on at least one surface of the microporous substrate, said coating layer comprising a coating composition according to any of claims 1 to 10.

21. The coated microporous substrate of any of claims 19 or 20 wherein the coating layer penetrates into at least the first 1 µm of the surface of the microporous substrate.

22. The coated microporous substrate of any of claims 19 to 21 wherein the microporous substrate has a thickness of from 12,7 to 2540 µm (0.5 to 100 mils).

23. The coated microporous substrate of any of claims 19 to 22 wherein the coat weight is from 0.001 g/m² to 50 g/m².

24. The coated microporous substrate of any of claims 19 to 23 wherein the microporous substrate (a) has a porosity of not more than 20,000 seconds/100cc air.

## Patentansprüche

1. Eine Beschichtungszusammensetzung für ein tinteaufnehmendes Substrat mit einem pH von weniger als 7, enthaltend:
(a) eine wässrige Dispersion eines anionischen Polyurethans; und
(b) eine wässrige Lösung einer kationischen stickstoffhaltigen polymeren farbstofffixierenden Verbindung,
erhältlich durch Zugabe der stickstoffhaltigen polymeren farbstofffixierenden Verbindung (b) in die anionische wässrige Polyurethandispersion (a).

2. Die Beschichtungszusammensetzung für ein tinteaufnehmendes Substrat gemäß Anspruch 1, wobei die wässrige anionische Polyurethandispersion ein oder mehrere anionische Polyurethane umfasst, ausgewählt aus der Gruppe bestehend aus aromatischen Polyetherpolyurethanen, aliphatischen Polyetherpolyurethanen, aromatischen Polyesterpolyurethanen, aliphatischen Polyesterpolyurethanen, aromatischen Polycaprolactampolyurethanen und aliphatischen Polycaprolactampolyurethanen.

3. Die Beschichtungszusammensetzung für ein tinteaufnehmendes Substrat gemäss einem der Ansprüche 1 oder 2, wobei das wässrige anionische Polyurethan eine oder mehrere Säuregruppen hat, ausgewählt aus der Gruppe bestehend aus Carbonsäure, Sulfonsäure und Mischungen davon.

4. Die Beschichtungszusammensetzung für ein tinteaufnehmendes Substrat gemäss einem der Ansprüche 1 bis 3, wobei die wässrige Lösung einer stickstoffhaltigen polymeren farbstofffixierenden Verbindung ein Polymer umfasst, das monomere Einheiten enthält, abgeleitet von einem oder mehreren stickstoffhaltigen Monomeren, ausgewählt aus der Gruppe bestehend aus: 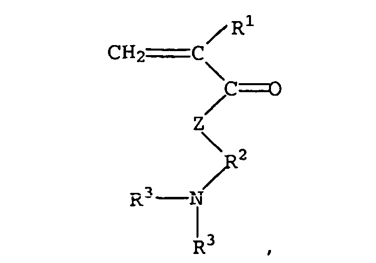 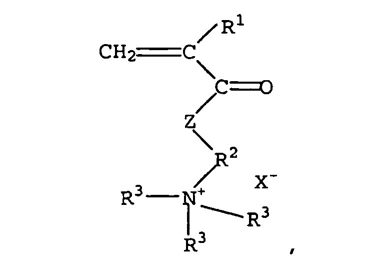 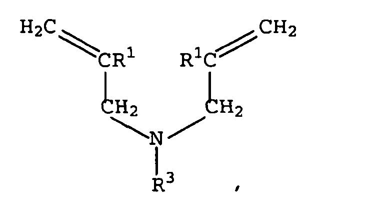 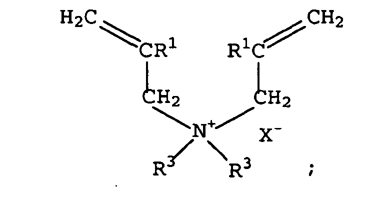 worin R¹ in jedem Falle und in jeder Struktur unabhängig voneinander ausgewählt ist aus der Gruppe bestehend aus H und C₁-C₃-aliphatischem Kohlenwasserstoff; R² für jede Struktur unabhängig voneinander eine zweibindige verbindende Gruppe ist, ausgewählt aus der Gruppe bestehend aus C₂-C₂₀-aliphatischem Kohlenwasserstoff, Polyethylenglycol und Polypropylenglycol; R³ ist in jedem Falle und in jeder Struktur unabhängig voneinander ausgewählt aus der Gruppe bestehend aus H, C₁-C₂₂-aliphatischem Kohlenwasserstoff und einem Rest aus der Reaktion des Stickstoffs mit Epichlorhydrin; Z ist ausgewählt aus der Gruppe bestehend aus -O- und -NR⁴-, worin R⁴ ausgewählt ist aus der Gruppe bestehend aus H und CH₃; und X ist ausgewählt aus der Gruppe bestehend aus Halogenen und Methylsulfat.

5. Die Beschichtungszusammensetzung für ein tinteaufnehmendes Substrat gemäss einem der Ansprüche 1 bis 4, wobei die wässrige anionische Polyurethandispersion mit 10 bis 70 Gewichtsprozent der Beschichtungszusammensetzung für das tinteaufnehmende Substrat vorliegt und die wässrige Lösung einer stickstoffhaltigen polymeren farbstofffixierenden Verbindung mit von 30 bis 90 Gewichtsprozent der Beschichtungszusammensetzung für das tinteaufnehmende Substrat vorliegt.

6. Die Beschichtungszusammensetzung für ein tinteaufnehmendes Substrat gemäss Anspruch 4 oder 5, wobei das stickstoffhaltige Monomer eines oder mehrere ist, ausgewählt aus der Gruppe bestehend aus
Dimethylaminoethyl(meth)acrylat,
(Meth)acryloyloxyethyltrimethylammoniumhalogene,
(Meth)acryloyloxyethyltrimethylammoniummethylsulfat,
Dimethylaminopropyl(meth)acrylamid,
(Meth)acrylamidopropyltrimethylammoniumhalogene,
(Meth)acrylamidopropyltrimethylammoniummethylsulfat,
Aminoalkyl(meth)acrylamid, worin das Amin mit Epichlorhydrin, Diallylamin,
Methyldiallylamin und Diallyldimethylammoniumhalogenen reagiert hat.

7. Die Beschichtungszusammensetzung für ein tinteaufnehmendes Substrat gemäss einem der Ansprüche 1 bis 6, wobei das anionische Polyurethan eines oder mehrere ist, ausgewählt aus der Gruppe bestehend aus aromatischen Polyetherpolyurethanen, aliphatischen Polyetherpolyurethanen, aromatischen Polyesterpolyurethanen und aliphatischen Polyesterpolyurethanen.

8. Die Beschichtungszusammensetzung für ein tinteaufnehmendes Substrat gemäss einem der Ansprüche 1 bis 7, wobei die stickstoffhaltige polymere farbstofffixierende Verbindung ein Polyamidamin ist, das mit Epichlorhydrin in Reaktion gebracht wurde.

9. Die Beschichtungszusammensetzung für ein tinteaufnehmendes Substrat gemäss einem der Ansprüche 1 bis 8, wobei der gesamte Harz-Feststoffgehalt 1 bis 35 Gewichtsprozent beträgt, bezogen auf das Gesamtgewicht der Beschichtungszusammensetzung für das tinteaufnehmende Substrat.

10. Die Beschichtungszusammensetzung für ein tinteaufnehmendes Substrat gemäss einem der Ansprüche 1 bis 9, wobei die Viskosität der Beschichtungszusammensetzung für das tinteaufnehmende Substrat weniger als 500 cps ist.

11. Ein Verfahren zur Herstellung einer Beschichtungszusammensetzung für ein tinteaufnehmendes Substrat gemäss einem der Ansprüche 1 bis 10 durch Zugabe einer wässrigen Lösung einer kationischen polymeren stickstoffhaltigen farbstofffixierenden Verbindung (b) zu einer wässrigen Dispersion eines anionischen Polyurethans (a).

12. Ein Verfahren zur Beschichtung eines tinteaufnehmendem Substrats, umfassend:
(a) Bereitstellen eines tinteaufnehmendem Substrats mit einer oberen Oberfläche und einer unteren Oberfläche;
(b) Bereitstellen einer Beschichtungszusammensetzung gemäss einem der Ansprüche 1 bis 10,
(c) Aufbringen dieser Beschichtungszusammensetzung auf wenigstens eine Seite des tinteaufnehmenden Substrats.

13. Das Verfahren gemäss Anspruch 12, wobei das tintenaufnehmende Substrat ein mikroporöses Substrat umfasst, das eine obere Oberfläche und eine untere Oberfläche hat, und umfasst:
(a) eine Matrix, die ein Polyolefin enthält;
(b) einen fein verteilten teilchenförmigen Siliciumfüllstoff, der in der Matrix vollständig verteilt ist; und
(c) ein Netzwerk von miteinander in Verbindung stehenden Poren, welche durch das gesamte mikroporöse Substrat hindurch miteinander in Kontakt stehen, wobei diese Poren wenigstens ungefähr 25 Volumenprozent dieses mikroporösen Substrates ausmachen.

14. Das Verfahren gemäss Anspruch 12 oder 13, wobei das Polyolefin eins oder beide umfasst, ausgewählt aus der Gruppe bestehend aus einem linearen Polyethylen mit hohem Molekulargewicht mit einer intrinsischen Viskosität von wenigstens 10 dl/g und einem linearen Polypropylen mit hohem Molekulargewicht mit einer intrinsischen Viskosität von wenigstens 5 dl/g.

15. Das Verfahren gemäss einem der Ansprüche 12 bis 14, wobei der Siliciumfüllstoff 50 bis 90 Gewichtsprozent des mikroporösen Substrates ausmacht.

16. Das Verfahren gemäss einem der Ansprüche 12 bis 15, wobei das tinteaufnehmende Substrat eine Porosität von nicht mehr als 20 000 Sekunden/100cc Luft hat.

17. Das Verfahren gemäss einem der Ansprüche 12 bis 16, wobei die Beschichtungszusammensetzung auf beide Seiten des tintenaufnehmenden Substrats aufgebracht wird.

18. Das Verfahren gemäss einem der Ansprüche 13 bis 17, wobei das Aufbringen der Beschichtungszusammensetzung umfasst:
(a) Aufbringen der Beschichtungszusammenselung auf das tinteaufnehmende Substrat unter Verwendung eines Verfahrens, ausgewählt aus der Gruppe bestehend aus Flexographie, Aufsprühen, Luftrakelauftrag, Gießlackierung, Eintauchen, Rakelbeschichtung, Blattbeschichtung, Gravur, Umkehrwalzenbeschichtung, Walzenauftrag, Aufsaugen, Leimpresse, Drucken, Aufbürsten, Zeichnen, Schlitzdüsenbeschichtung und Extrudieren; und
(b) Trocknen des beschichteten, tinteaufnehmenden Substrats durch Anwenden einer Temperatur von Umgebungstemperatur bis 177°C (350°F).

19. Ein beschichtetes mikroporöses Substrat, erhältlich durch das Verfahren gemäss der Ansprüche 13 bis 18.

20. Ein beschichtetes mikroporöses Substrat, umfassend:
(a) ein mikroporöses Substrat, wie es in einem der Ansprüche 13 bis 16 definiert ist; und
(b) eine bedeckende Schicht auf wenigstens einer Oberfläche des mikroporösen Substrats, wobei diese bedeckende Schicht eine Beschichtungszusammensetzung gemäss einem der Ansprüche 1 bis 10 umfasst.

21. Das beschichtete mikroporöse Substrat gemäss einem der Ansprüche 19 oder 20, wobei die bedeckende Schicht in wenigstens den ersten 1 µm der Oberfläche des mikroporösen Substrates eindringt.

22. Das beschichtete mikroporöse Substrat gemäss einem der Ansprüche 19 bis 21, wobei das mikroporöse Substrat eine Dicke von 12,7 bis 2540 *µ*m hat.

23. Das beschichtete mikroporöse Substrat gemäss einem der Ansprüche 19 bis 22, wobei das Beschichtungsgewicht 0,001 g/m² bis 50 g/m² beträgt.

24. Das beschichtete mikroporöse Substrat gemäss einem der Ansprüche 19 bis 23, wobei das mikroporöse Substrat (a) eine Porosität von nicht mehr als 20 000 Sekunden/100 cc Luft hat.

## Revendications

1. Composition de revêtement pour substrat imprimable à l'encre ayant un pH inférieur à 7, comprenant :
(a) une dispersion aqueuse de polyuréthanne anionique; et
(b) une solution aqueuse d'un composé fixateur de colorant polymère contenant de l'azote cationique,
obtenue par addition du composé fixateur de colorant polymère (b) contenant de l'azote dans la dispersion aqueuse de polyuréthanne anionique (a).

2. Composition de revêtement pour substrat imprimable à l'encre selon la revendication 1, dans laquelle la dispersion aqueuse de polyuréthanne anionique comprend un ou plusieurs polyuréthannes anioniques choisis dans le groupe constitué des polyuréthannes de polyéthers aromatiques, des polyuréthannes de polyéthers aliphatiques, des polyuréthannes de polyesters aromatiques, des polyuréthannes de polyesters aliphatiques, des polyuréthannes de polycaprolactame aromatique et des polyuréthannes de polycaprolactame aliphatique.

3. Composition de revêtement pour substrat imprimable à l'encre selon l'une quelconque des revendications 1 et 2, dans laquelle le polyuréthanne anionique aqueux contient un ou plusieurs groupements acides choisis dans le groupe constitué d'un acide carboxylique, d'un acide sulfonique et de leurs mélanges.

4. Composition de revêtement pour substrat imprimable à l'encre selon l'une quelconque des revendications 1 à 3, dans laquelle la solution aqueuse d'un composé fixateur de colorant polymère contenant de l'azote comprend un polymère comprenant des résidus de monomères dérivés d'un ou plusieurs monomères contenant de l'azote choisis dans le groupe constitué des suivants : 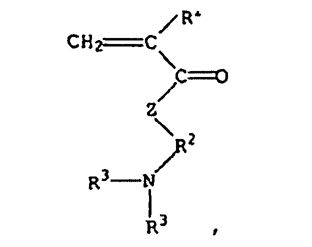 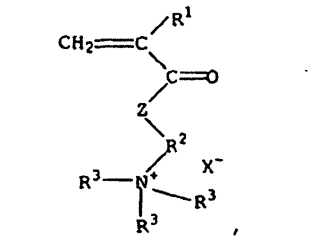 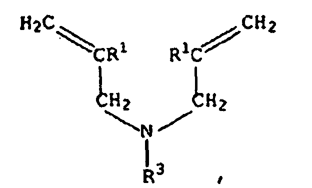 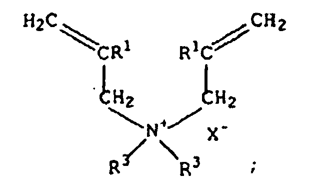 dans lequel R¹ est indépendamment choisi pour chaque occurrence dans chaque structure dans le groupe constitué de H et de groupements aliphatiques en C₁ à C₃; R² est indépendamment pour chaque structure un groupement de liaison divalent choisi dans le groupe constitué des hydrocarbures aliphatiques en C₂ à C₂₀, du polyéthylèneglycol et du polypropylèneglycol; R³ est indépendamment pour chaque occurrence dans chaque structure choisi dans le groupe constitué de H, d'hydrocarbures en C₁ à C₂₂ et d'un résidu de la réaction de l'azote avec de l'épichlorhydrine; Z est choisi dans le groupe constitué de -O- et -NR⁴-, où R⁴ est choisi dans le groupe constitué de H et CH₃; et X est choisi dans le groupe constitué d'halogénures et de sulfate de méthyle.

5. Composition de revêtement pour substrat imprimable à l'encre selon l'une quelconque des revendications 1 à 4, dans laquelle la dispersion aqueuse de polyuréthanne anionique est présente à raison de 10 à 70 pour-cent en poids de la composition de revêtement pour substrat imprimable à l'encre et la solution aqueuse d'un composé fixateur de colorant polymère contenant de l'azote est présente à raison de 30 à 90 pour-cent en poids de la composition de revêtement pour substrat imprimable à l'encre.

6. Composition de revêtement pour substrat imprimable à l'encre selon la revendication 4 ou 5, dans laquelle le monomère contenant de l'azote est un ou plusieurs monomères choisis dans le groupe constitué du(méth)acrylate de diméthylaminoéthyle, des halogénures de (méth)acryloyloxyéthyltriméthylammonium, du méthylsulfate de (méth)acryloyloxyéthyltriméthylammonium, du (méth)acrylamide de diméthylaminopropyle, des halogénures de (méth)acrylamidopropyltriméthylammonium, du méthylsulfate de (méth)acrylamidopropyltriméthylammonium, du (méth)acrylamide d'aminoalkyle, où l'amine réagit avec l'épichlorohydrine, de la diallylamine, de la méthyldiallylamine et des halogénures de diallyldiméthylammonium.

7. Composition de revêtement pour substrat imprimable à l'encre selon l'une quelconque des revendications 1 à 6, dans laquelle le polyuréthanne anionique est un ou plusieurs polyuréthannes choisis dans le groupe constitué des polyuréthannes de polyéthers aromatiques, des polyuréthannes de polyéthers aliphatiques, des polyuréthannes de polyesters aromatiques et des polyuréthannes de polyesters aliphatiques.

8. Composition de revêtement pour substrat imprimable à l'encre selon l'une quelconque des revendications 1 à 7, dans laquelle le composé fixateur de colorant polymère contenant de l'azote est une amine de polyamide ayant réagi avec l'épichlorhydrine.

9. Composition de revêtement pour substrat imprimable à l'encre selon l'une quelconque des revendications 1 à 8, dans laquelle le total des solides résineux est de 1 à 35 pour-cent en poids par rapport au poids total de la composition de revêtement pour substrat imprimable à l'encre.

10. Composition de revêtement pour substrat imprimable à l'encre selon l'une quelconque des revendications 1 à 9, dans laquelle la viscosité de la composition de revêtement pour substrat imprimable à l'encre est inférieure à 500 cps.

11. Procédé de préparation d'une composition de revêtement pour substrat imprimable à l'encre selon l'une quelconque des revendications 1 à 10 par addition d'une solution aqueuse d'un composé fixateur de colorant polymère (b) contenant de l'azote cationique à une dispersion aqueuse de polyuréthanne anionique (a).

12. Procédé de revêtement d'un substrat imprimable à l'encre comprenant :
(a) la mise en oeuvre d'un substrat imprimable à l'encre ayant une surface supérieure et une surface inférieure;
(b) la mise en oeuvre d'une composition de revêtement selon l'une quelconque des revendications 1 à 10; et
(c) l'application de ladite composition de revêtement sur au moins une face du substrat imprimable à l'encre.

13. Procédé selon la revendication 12, dans lequel le substrat imprimable à l'encre comprend un substrat microporeux ayant une surface supérieure et une surface inférieure et comprenant :
(a) une matrice comprenant une polyoléfine;
(b) une charge siliceuse particulaire finement divisée répartie dans toute la matrice; et
(c) un réseau de pores d'interconnexion communiquant dans tout le substrat microporeux, lesdits pores constituant au moins environ 35 pour-cent en volume dudit substrat microporeux.

14. Procédé selon la revendication 12 ou 13, dans lequel la polyoléfine comprend un ou les deux polyoléfines choisies dans le groupe constitué d'un polyéthylène linéaire à poids moléculaire élevé ayant une viscosité intrinsèque d'au moins 10 décilitres/gramme et un polypropylène linéaire à poids moléculaire élevé ayant une viscosité intrinsèque d'au moins 5 décilitres/ gramme.

15. Procédé selon l'une quelconque des revendications 12 à 14, dans lequel la charge siliceuse constitue 50 pour-cent à 90 pour-cent en poids du substrat microporeux.

16. Procédé selon l'une quelconque des revendications 12 à 15, dans lequel le substrat imprimable à l'encre présente une porosité qui ne dépasse pas 20.000 secondes/100 cm³ d'air.

17. Procédé selon l'une quelconque des revendications 12 à 16, dans lequel la composition de revêtement est appliquée aux deux faces du substrat imprimable à l'encre.

18. Procédé selon l'une quelconque des revendications 13 à 17, dans lequel l'application de la composition de revêtement comprend :
(a) l'application de la composition de revêtement au substrat imprimable à l'encre par le biais d'un procédé choisi dans le groupe constitué de la flexographie, de la pulvérisation, de l'enduction par lame d'air, du revêtement en rideau, de l'immersion, du revêtement par tige, du revêtement à la lame, de la gravure, du revêtement par rouleaux inverses, de l'application au rouleau, de l'imbibition, de l'application à la presse d'encollage, de l'impression, de l'application à la brosse, du laminage, du revêtement à la filière droite, de l'extrusion; et
(b) le séchage du substrat revêtu imprimable à l'encre par application d'une température allant de la température ambiante à 177°C (350°F).

19. Substrat microporeux obtenu par le procédé selon l'une quelconque des revendications 13 à 18.

20. Substrat microporeux revêtu comprenant :
(a) un substrat microporeux tel que défini selon l'une quelconque des revendications 13 à 16;
(b) une couche de revêtement sur au moins une surface du substrat microporeux, ladite couche de revêtement comprenant une composition de revêtement selon l'une quelconque des revendications 1 à 10.

21. Substrat microporeux revêtu selon l'une quelconque des revendications 19 et 20, dans lequel la couche de revêtement pénètre dans au moins le premier *µ*m de la surface du substrat microporeux.

22. Substrat microporeux revêtu selon l'une quelconque des revendications 19 à 21, dans lequel le substrat microporeux a une épaisseur de 12,7 à 2540 *µ*m (0,5 à 100 mils).

23. Substrat microporeux revêtu selon l'une quelconque des revendications 19 à 22, dans lequel le poids du revêtement est de 0,001 g/m² à 50 g/m².

24. Substrat microporeux revêtu selon l'une quelconque des revendications 19 à 23, dans lequel le substrat microporeux (a) a une porosité qui ne dépasse pas 20.000 secondes/100 cm³ d'air.
